# EUROPEAN PATENT SPECIFICATION

(11) **EP 3 859 284 B1**
(45) Date of publication and mention of the grant of the patent: **31.05.2023**
(21) Application number: 19895245.9
(22) Date of filing: 06.09.2019
(51) Int. Cl.: G01D 5/347

(54) **CODE DISC AND ENCODER**
CODIERSCHEIBE UND CODIERER
DISQUE DE CODE ET CODEUR

(30) Priority: 12.12.2018 CN 201811517405
(43) Date of publication of application: 04.08.2021
(73) Proprietor: Gree Electric Appliances, Inc. of Zhuhai, Zhuhai, Guangdong 519070 (CN)
(72) Inventor: PENG, Yuli, Zhuhai, Guangdong 519070 (CN); ZHONG, Chengbao, Zhuhai, Guangdong 519070 (CN); XIE, Fang, Zhuhai, Guangdong 519070 (CN); ZHOU, Xi, Zhuhai, Guangdong 519070 (CN); WANG, Yang, Zhuhai, Guangdong 519070 (CN)
(74) Representative: Rossi, Ugo
(86) International application number: PCT/CN2019/104776
(87) International publication number: WO 2020/119193

(56) References cited:
- EP-A1- 2 869 033
- CN-A- 106 092 163
- CN-A- 106 248 117
- US-A1- 2015 354 992

## Description

### TECHNICAL FIELD

The present application relates to the field of encoder technology, and specifically relates to a code disc and an encoder, and more particular to a code disc for an absolute encoder and a photoelectric encoder.

### BACKGROUND

The photoelectric encoder is an angle measuring device that integrates light, machine and electricity, which converts optical signals into electrical signals through the mechanical structures and signal processing circuits, thereby implementing direct or indirect measurement of various physical quantities such as a diagonal displacement, a position and a speed.

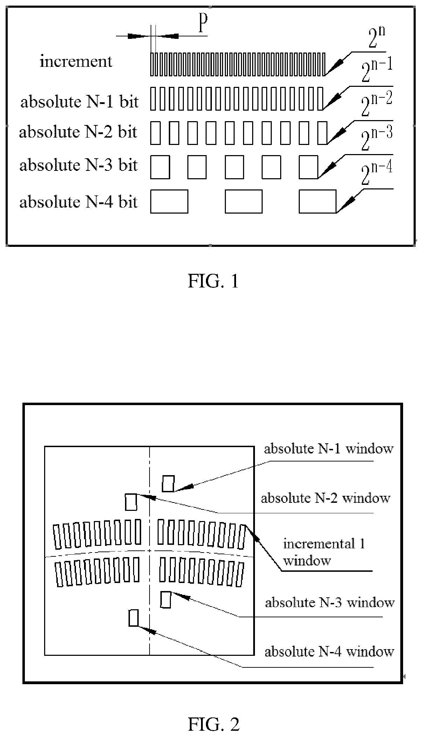

The coding mode and fixed grating of the absolute encoder in the related art are shown in FIGS. 1 and 2. The incremental code channel is configured to obtain the sine and cosine signals to further subdivide and accordingly improve the resolution of the encoder; the absolute signal adopts the binary coding to provide the absolute position of the encoder. The window width of the absolute signal is a grating pitch P of the incremental signal. As the number of incremental code channel increases, the grating pitch P gradually decreases, resulting in that the absolute signal window becomes narrow, the PD (photodiode array) photosensitivity is insufficient, the instability of signal output is increased, the probability of error codes for absolute signals is significantly increased, and accordingly the reliability of the encoder is reduced.

The document EP 2869033 A1 discloses an optical module including: a light source configured to emit diffusion light to tracks; one light receiving array and another light receiving array which are arranged across the light source in a width direction substantially vertical to the measurement direction; a light receiving array arranged between the one light receiving array and the light source, and configured to receive light which is reflected at the tracks having a first incremental pattern; and a light receiving array arranged between the another first light receiving array and the light source, and configured to receive light which is reflected at the tracks having a second incremental pattern which pitch is longer than a pitch of the first incremental pattern.

The document US 2015/354992A1 discloses an encoder including a disc coupled to a rotating body and having first tracks and one or more second tracks, a light source which emits light to the first and second tracks, first arrays positioned mutually offset in width direction of the disc perpendicular to measurement direction of the first and second tracks such that the first arrays receive light reflected or transmitted by the first tracks and output first signals, two second arrays positioned to receive light reflected or transmitted by the second track such that the second arrays output two second signals having mutually different phases, and a device which generates position data of the body based on one or more first signals and one of the second signals selected based on the first signals. Each first track has an incremental pattern along the measurement direction, and the second track has an absolute pattern along the measurement direction.

The document CN 106092163 A discloses a photoelectric encoder and a fitting structure of a photoelectric conversion chip and a fixed grating thereof. The fitting structure comprises a first location mark and a second location mark which is aligned with the first location mark during fitting. The first location mark is formed on the photoelectric conversion chip, and the second location mark is formed on the fixed grating. The first location mark is composed of light window lines between multiple incremental code channels of the photoelectric conversion chip. The photoelectric conversion chip and the fixed grating can be fitted up accurately as long as the first location mark and the second location mark are overlapped geometrically. Thus, the measurement precision and working reliability of the photoelectric encoder are ensured. The photoelectric encoder has the characteristics of simple structure and low cost.

The document CN 106248117 A discloses a fixed grating and a photoelectric encoder. The fixed grating comprises a second increment code track arranged in a preset area; the preset area is corresponding to a first increment code track and the width is the same as that of the first increment code track; the second increment code track is an evenly-distributed step code track according to a preset layer number in the width direction; the left-right interval of the step code track is the length of the first increment code track; the offset in the left-right direction of any two adjacent layers in the same step code track is the preset offset; the length of each layer is the product between the preset number plus one and the preset offset; and the preset offset is the quotient when the length of the first increment code track is divided by twice the preset number. According to the technical scheme of the invention, high-precision subdivision on source signals is facilitated, the photoelectric encoder is facilitated, and requirements of high resolution and small size are met.

### SUMMARY

The purpose of the present application is to provide a code disc and an encoder for the above-mentioned defects, so as to address the problems in the related art that the window of the absolute signal becomes narrower due to the increase in the number of the reticles of incremental code channels and accordingly the reliability of the encoder is reduced, thereby improving the reliability of the encoder.

The present disclosure provides a code disc, including: a code channel component obtained by coding according to a set coding mode, and a fixed grating corresponding to the code channel component; the coding mode is configured to increase a width of an absolute window of the code channel component;
the code channel component includes: more than one incremental code channel and more than one absolute code channel; reticles of the more than one incremental code channel and the more than one absolute code channel are uniformly distributed with alternate light and dark;
the fixed grating includes: more than one incremental window and more than one absolute window; the more than one absolute window is distributed on a periphery of the more than one incremental window;
when the coding bit number *N* of the code disk is equal to four, the more than one incremental window and the more than one absolute window include: a first incremental window, a second incremental window, a *(N-3)-th* absolute window and a *(N-4)-th* absolute window; the first incremental window includes four portions arranged by using a four-quadrant split phase method to generate signals A, /A, and B, /B which are configured to obtain sine and cosine signals; the second incremental window includes two portions phases of which are staggered by 90° to generate two square wave signals with a phase difference of 90°, the two square wave signals are configured to generate a first bit and a second bit of the absolute signal; the *(N-3)-th* absolute window and the *(N-4)-th* absolute window are configured to generate a third bit and a fourth bit of the absolute signal.

Optionally, when a coding bit number N of the code disc is equal to four, the more than one incremental code channel and the more than one absolute code channel include: a first incremental code channel, a second incremental code channel, a *(N-3)-th* absolute code channel and a *(N-4)-th* absolute code channel; reticles of the first incremental code channel, the second incremental code channel, the *(N-3)-th* absolute code channel, and the *(N-4)-th* absolute code channel are uniformly distributed with alternate light and dark.

Optionally, a reticle period of the second incremental code channel is *M* times that of the first incremental code channel, and a reticle period of the *(N-3)-th* absolute code channel is *2M* times that of the first incremental code channel, and a reticle period of the *(N-4)-th* absolute code channel is *4M* times that of the first incremental code channel, M is a natural number.

Optionally, a window width of the second incremental window is *P* times that of the first incremental window, and *P* is a natural number; and/or, window widths of the *(N-3)-th* absolute window and the *(N-4)-th* absolute window are *2P* times the window width of the first incremental window, and *P* is a natural number.

Optionally, the window width of the second incremental window is *P* times that of the first incremental window, *P* is a natural number; and/or, the window widths of the *(N-3)-th* absolute window and the *(N-4)-th* absolute window are *2P* times the window width of the first incremental window, and P is a natural number. The present disclosure in another aspect provides an encoder to match the above code disc, including an encoder body and the above-mentioned code disc.

Optionally, the encoder further includes an LED, a photosensitive unit and a signal processing circuit; the encoder body, the code disc, the LED, the photosensitive unit and the signal processing circuit form a photoelectric encoder.

In the solution of the present disclosure, by increasing the width of the absolute window, the PD photosensitivity can be guaranteed, the stability of the absolute signal can be improved, and the reliability of the encoder in the application process can be guaranteed.

Furthermore, in the solution of the present disclosure, by increasing the width of the absolute window, the number of code channels of the grating can be decreased on the premise of the same encoder bits, which is beneficial to the miniaturization of the encoder.

Therefore, in the solution of the present disclosure, by increasing the width of the absolute window, the PD photosensitivity can be guaranteed, and the problems in the related art that the absolute signal window becomes narrower as the number of reticles of the incremental code channel increases and accordingly the reliability of the encoder is reduced (e.g., the window width of the absolute signal is equal to a grating pitch *P* of the incremental signal, the grating pitch *P* gradually decreases with the increase of the number of reticles of the incremental code channels, which results in narrowing of the window of the absolute signal window, thereby the reliability of the encoder is reduced). Therefore, defects of narrow window width of the absolute window, low stability of the absolute signal and low reliability of the encoder in related art are overcome; and advantages of wide window width of the absolute window, good stability of the absolute signal and high reliability of the encoder are achieved.

Other features and advantages of the present disclosure will be described in the following specification, and partly become apparent from the specification, or understood by implementing the present disclosure.

The technical solution of the present disclosure will be further detailed below through the accompanying drawings and embodiments.

### BRIEF DESCRIPTION OF THE DRAWINGS

FIG. 1 is a schematic structure diagram of a coding mode of an existing code disc (such as a code disc of an absolute encoder).
FIG. 2 is a schematic structure diagram of a fixed grating of an existing code disc (such as a code disc of an absolute encoder).
FIG. 3 is a schematic structure diagram of a coding mode of a code disk (such as a code disk of an absolute encoder) according to an example suitable for understanding the present invention.
FIG. 4 is a schematic structure diagram of a fixed grating of a code disc (such as a code disc of an absolute encoder) according to an embodiment of the present disclosure.
FIG. 5 is a schematic waveform diagram of an output signal of a code disc (such as a code disc of an absolute encoder) according to an embodiment of the present disclosure.

### DETAILED DESCRIPTION

In order to make the purpose, technical solution, and advantages of the present disclosure clearer, the technical solution of the present disclosure will be described clearly and completely in conjunction with specific embodiments of the present disclosure and corresponding accompanying drawings. Apparently, the described embodiments are merely some embodiments of the present disclosure, rather than all the embodiments. Based on the embodiments in the present disclosure, all other embodiments obtained by those of ordinary skill in the art without creative work shall fall within the protection scope of the present disclosure.

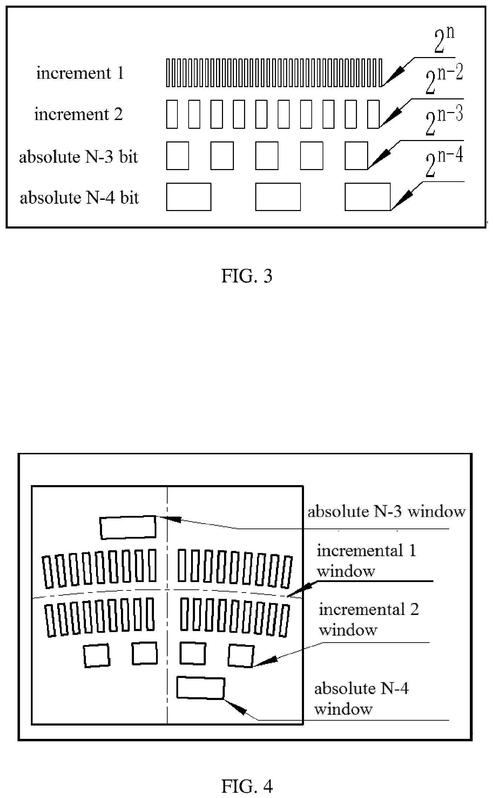

According to an example, a code disc (such as a code disc of an absolute encoder) is provided, with reference to a schematic structure diagram of a code disc according to an example shown in FIG. 3. The code disk includes: a code channel component obtained by coding according to a set coding mode, and a fixed grating corresponding to the code channel component.

The above-mentioned coding mode can be configured to increase a width of an absolute window of the code channel component.

For example, a coding mode of an encoder and a corresponding fixed grating are provided to increase the width of the absolute window, ensure the PD photosensitivity, improve the stability of the absolute signal, and ensure the reliability of the encoder in the application process; at the same time, under the premise of the same encoder bits, the number of code channels of the grating can be reduced, which is beneficial to the miniaturization of the encoder.

Therefore, the required code channel component is obtained through the coding mode of increasing the width of the absolute window of the code channel component, and the fixed grating corresponding to the code channel component is obtained, which can increase the width of the absolute window, thereby improving the stability of the absolute signal and ensuring the reliability of the encoder in the application process.

In an optional example, the above-mentioned code channel component includes more than one incremental code channel and more than one absolute code channel.

The above-mentioned more than one incremental code channel and more than one absolute code channel are arranged in sequence (such as from top to bottom, or from left to right), and reticles of the more than one incremental code channel and more than one absolute code channel are uniformly distributed with alternate light and dark.

Therefore, the reticles of the incremental code channel and the absolute code channel in the code channel component are uniformly distributed with alternate light and dark, which is beneficial to increase the width of the absolute window, ensure the PD photosensitivity, and improve the stability of the absolute signal.

Optionally, when the coding bit number *N* of the code disk is equal to 4 (*N* is a natural number), the more than one incremental code channel and more than one absolute code channel may include: a first incremental code channel (such as an incremental code channel 1), a second incremental code channel (such as an incremental code channel 2), a *(N-3)-th* absolute code channel (such as an absolute code channel *N-3*) and a *(N-4)-th* absolute code channel (such as an absolute code channel *N-4*)*.*

Reticles of the first incremental code channel, the second incremental code channel, the *(N-3)-th* absolute code channel, and the *(N-4)-th* absolute code channel are uniformly distributed with alternate light and dark.

For example, the principle of the coding mode of the encoder is shown in FIG. 3, which consists of an incremental code channel 1, an incremental code channel 2, an absolute code channel *N-3,* and an absolute code channel *N-4.* The corresponding fixed grating is shown in FIG. 4, which consists of an increment 1 window, an increment 2 window, an absolute *N-3* window, and an absolute *N-4* window. Reticles of the above-mentioned incremental code channel 1, incremental code channel 2, absolute code channel *N-3* and absolute code channel *N-4* are uniformly distributed with alternate light and dark. *N* is the number of bits of the binary encoder.

Therefore, the reticles of the incremental code channel and the absolute code channel in the code channel component when the coding bit number *N* is 4 are uniformly distributed with alternate light and dark, which is beneficial to increase the width of the absolute window, ensure the PD photosensitivity and improve the stability of the absolute signal.

More optionally, a reticle period of the second incremental code channel is equal to *M* times that of the first incremental code channel, and a reticle period of the *(N-3)-th* absolute code channel is equal to *2M* times that of the first incremental code channel. A reticle period of the *(N-4)-th* absolute code channel is equal to *4M* times that of the first incremental code channel; and M is a natural number.

For example, the reticle period of the incremental code channel 2 is equal to 4 times that of the incremental code channel 1; the reticle period of the absolute code channel *N-3* is equal to 8 times that of the incremental code channel 1; and the reticle period of the absolute code channel *N-4* is equal to 16 times that of the incremental code channel 1.

Therefore, in the code channel component, when the coding bit number *N* is equal to 4, the reticle period of the first incremental code channel is used as a reference, and the reticle periods of other incremental code channels and the absolute code channels are set to multiple of the reference, which is beneficial to increase the width of the absolute window and improve the stability of the encoder.

In an optional example, the above-mentioned fixed grating may include: more than one incremental window and more than one absolute window.

The more than one absolute window is distributed on a periphery of the more than one incremental window.

Therefore, the absolute window is distributed on the periphery of the incremental window in the fixed grating, which is beneficial to increase the width of the absolute signal and ensure the PD photosensitivity.

Optionally, when the coding bit number *N* of the code disk is equal to 4 (N is a natural number), the more than one incremental window and the more than one absolute window may include a first incremental window (such as an incremental 1 window), a second incremental window (such as an incremental 2 window), a *(N-3)-th* absolute window (such as an absolute *N-3* window) and a *(N-4)-th* absolute window (such as an absolute *N-4* window).

Specifically, the above-mentioned first incremental window includes four portions arranged by a four-quadrant split phase method to generate signals A, /A, B, and /B, which can be configured to obtain sine and cosine signals through a set signal processing.

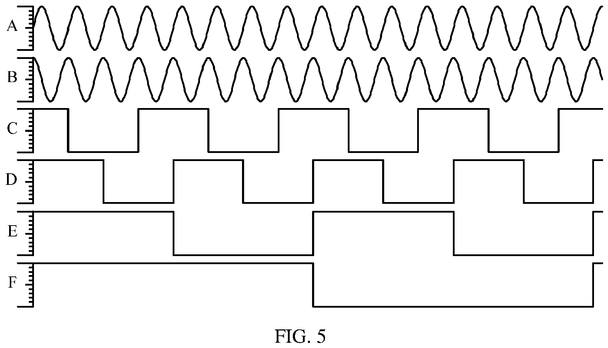

For example, the above-mentioned increment 1 window contains four portions arranged by using the four-quadrant split phase method to generate signals A, /A, B, and /B, which are processed by a subsequent circuit to obtain sine and cosine signals. The waveforms indicated by A and B in FIG. 5 are used for signal subdivision to improve the encoder resolution.

Specifically, the above-mentioned second incremental window includes two portions phases of which are staggered by 90° to generate two square wave signals with a phase difference of 90°, which can be configured to generate a first bit and a second bit of the absolute signal through the set calculation and processing.

For example, the above-mentioned increment 2 window with the window width thereof equal to 4 times that of the increment 1 window, includes two portions which are staggered by 90° and generate two square wave signals with a phase difference of 90°; the waveforms are indicated by C, D in FIG. 5, and the two square wave signals generate the first and second bits of the absolute signal through calculation.

Specifically, the above-mentioned *(N-3)-th* absolute window and the *(N-4)-th* absolute window can be configured to generate the *3-rd* and *4-th* bits of the absolute signal.

For example, the above-mentioned absolute *N-3* window and absolute *N-4* window with the window widths thereof 8 times that of the increment 1 window, are configured to generate the third and fourth bits of the absolute signal, with the waveforms indicated by E and F in FIG. 5. In FIG. 5, the absolute codes formed by C, D, E, F are 1111, 1110, 1100, 1101, 1011, 1010, 1000, 1001, 0111, 0110, 0100, 0101, 0011, 0010, 0000, 0001, i.e., there are sixteen codes in total without duplication, accordingly the purpose of four-bit coding is achieved.

Therefore, the incremental window and the absolute window are provided in the fixed grating to generate the signal, which is beneficial to improve the stability of the absolute signal.

More optionally, the window width of the second incremental window is P times that of the first incremental window, and *P* is a natural number.

More optionally, the window widths of the *(N-3)-th* absolute window and the *(N-4)-th* absolute window are *2P* times the window width of the first incremental window; *P* is a natural number.

More optionally, the window width of the second incremental window is P times that of the first incremental window, and the window widths of the *(N-3)-th* absolute window and the *(N-4)-th* absolute window are *2P* times the window width of the first incremental window; and *P* is a natural number.

Therefore, in a fixed grating, when the coding bit number N is 4, the window width of the first incremental window is used as the reference, and the window widths of other incremental windows and absolute windows are set as multiple of the reference, Which is beneficial to increase the width of the absolute window and improve the stability of the encoder.

It has been verified by a large number of experiments that by increasing the width of the absolute window using the technical solution of the present disclosure, the PD photosensitivity can be guaranteed, the stability of the absolute signal can be improved, and the reliability of the encoder in the application process can be guaranteed.

According to embodiments of the present disclosure, an encoder corresponding to a code disc is further provided. The encoder can include an encoder body. In addition, the encoder can further include the above-mentioned code disc.

Optionally, the encoder can further include: an LED, a photosensitive unit, and a signal processing circuit.

The encoder body, the code disc, the LED, the photosensitive unit, and the signal processing circuit form a photoelectric encoder.

For example, a photoelectric encoder can include: a structural body, an LED, a photosensitive unit, a signal processing circuit, and a code disc; it is characterized by adopting the above-mentioned coding mode and a fixed grating.

The structural body is a body structure of the encoder, which can include: a shaft, a bracket, a bearing, a nut, etc.

Therefore, the required code channel component is obtained by the coding mode of increasing the width of the absolute window of the code channel component, and the fixed grating corresponding to the code channel component is obtained, which can increase the width of the absolute window, thereby improving the stability of the absolute signal and ensuring the reliability of the photoelectric encoder in the application process.

In an optional embodiment, in order to solve the problems that the absolute signal window becomes narrower as the number of reticles of the incremental code channel increases and the reliability of the encoder is reduced, the solution of the present disclosure provides an encoder coding mode and a corresponding fixed grating to increase the width of the absolute window, ensure the PD photosensitivity, improve the stability of the absolute signal, and ensure the reliability of the encoder in the application process; at the same time, under the premise of the same encoder bits, the number of code channels of the grating can be reduced, which is beneficial to the miniaturization of the encoder.

In an optional example, the solution of the present disclosure provides an encoder coding mode and a corresponding fixed grating to increase the width of the absolute window, ensure the PD photosensitivity, improve the stability of the absolute signal, and ensure the reliability of the encoder in the application process; at the same time, under the premise of the same encoder bits, the number of code channels of the grating can be reduced, which is beneficial to the miniaturization of the encoder.

Optionally, the solution of the present disclosure provides an absolute encoder dual-incremental code channel coding mode and a corresponding fixed grating, which can effectively ensure the width of the absolute window, increase the PD photosensitivity, ensure the stability of the absolute signal, and enhance the reliability of the encoder in the application process; at the same time, under the premise of the same encoder bits, the number of code channels of the grating can be decreased by one, which is beneficial to the miniaturization of the encoder.

It can be seen that the present disclosure provides an encoder coding mode and a corresponding fixed grating, which can increase the width of the absolute window, ensure the PD photosensitivity, solve the problem of insufficient photosensitivity of the photoelectric encoder to the window, improve the stability of the absolute signal, solve the problem of instability of the absolute signal of the photoelectric encoder in the application process, and ensure the reliability of the encoder in the application process; at the same time, under the premise of the same encoder bits, the number of code channels of the grating can be reduced, which is beneficial to the miniaturization of the encoder and solve the miniaturization problem of the photoelectric encoder.

Optionally, reference can be made to the example shown in fig. 3 and the embodiments shown in fig. 4 and 5, which illustrate the specific implementation process of the solution of the present disclosure.

For ease of presentation, *N*=4 is taken as an example in the solution of the present disclosure.

In an optional specific example, the principle of the encoder coding mode is shown in FIG. 3, which consists of an incremental code channel 1, an incremental code channel 2, an absolute code channel *N-3,* and an absolute code channel *N-4.* The corresponding fixed grating is shown in FIG. 4, which consists of an increment 1 window, an increment 2 window, an absolute *N-3* window, and an absolute *N-4* window.

Optionally, the reticles of the above incremental code channel 1, incremental code channel 2, absolute code channel *N-3,* and absolute code channel *N-4* are uniformly distributed with alternate light and dark.

The reticle period of the incremental code channel 2 is 4 times that of the incremental code channel 1; the reticle period of the absolute code channel *N-3* is 8 times that of the incremental code channel 1; and the reticle period of the absolute code channel *N-4* is 16 times that of the incremental code channel 1. The multiple can be a fixed value and does not change according to the value of *N.*

Optionally, the above-mentioned increment 1 window, including four portions arranged by using the 4-quadrant split phase method, generates signals A, /A, B, and /B, and obtains sine and cosine signals through the subsequent circuit processing. The waveforms indicated by A, B shown in FIG. 5 are used for signal subdivision to improve the resolution of the encoder.

The subsequent processing may include: signal conditioning, signal amplification, and signal filtering processing, etc.

Optionally, the window width of the increment 2 window is 4 times the window width of the increment 1 window, and includes two portions, phases of which are staggered by 90° to generate two square wave signals with a phase difference of 90°. The waveforms are indicated by C, D shown in FIG. 5, and the two square wave signals generate the first and second bits of the absolute signal through calculation.

Optionally, the window widths of the above-mentioned absolute *N-3* window and absolute *N-4* window are 8 times the window width of the increment 1 window, and are configured to generate the third and fourth bits of the absolute signal. The waveforms are indicated by E and F shown in FIG. 5.

In FIG. 5, the absolute codes formed by C,D,E,F are 1111, 1110, 1100, 1101, 1011, 1010, 1000, 1001, 0111, 0110, 0100, 0101, 0011, 0010, 0000, 0001, i.e., there are sixteen codes in total without duplication, accordingly the purpose of four-bit coding is achieved.

By comparison, the width of the absolute window of the encoder using the above-mentioned coding mode is 4 times the width of the absolute window in the related art, which improves the PD photosensitivity, ensures the stability of the absolute signal, and enhances the reliability of the encoder in the application process; at the same time, under the premise of the same encoder bits, the number of code channels of the grating can be decreased by one, which is beneficial to the miniaturization of the encoder.

Since the processing and functions implemented by the encoder in this embodiment basically correspond to the embodiments, principles, and examples of the code disc shown in FIGS. 3 to 5, as for the description in this embodiment not exhaustive, reference can be made to the relevant description in the aforementioned embodiments, which will not be repeated here.

It has been verified by a large number of experiments that, by using the technical solution of the present disclosure, the number of code channels of the grating can be decreased by increasing the width of the absolute window under the premise of the same encoder bits, which is beneficial to the miniaturization of the encoder.

In conclusion, it is easy for those skilled in the art to understand that the above advantageous modes can be freely combined and superimposed on the premise of no conflict.

The above descriptions are merely embodiments of the present disclosure and are not intended to limit the present disclosure. For those skilled in the art, the present disclosure may have various modifications and changes. Any modification, equivalent replacement, improvement, etc., made within the principle of the present disclosure shall fall within the scope of protection of the claims of the present disclosure.

## Claims

1. A code disc, comprising: a code channel component obtained by coding according to a set coding mode, and a fixed grating corresponding to the code channel component,
wherein, the coding mode is configured to increase a width of an absolute window of the code channel component;
wherein the code channel component comprises: more than one incremental code channel and more than one absolute code channel;
the coding mode comprises: reticles of the more than one incremental code channel and the more than one absolute code channel are uniformly distributed with alternate light and dark;
wherein the fixed grating comprises: more than one incremental window and more than one absolute window;
the more than one absolute window is distributed on a periphery of the more than one incremental window;
**characterized in that** when the coding bit number N of the code disk is equal to four, the more than one incremental window and the more than one absolute window comprise: a first incremental window, a second incremental window, a *(N-3)-th* absolute window and a *(N-4)-th* absolute window;
the first incremental window comprises four portions arranged by using a four-quadrant split phase method to generate signals A, /A, and B, /B which are configured to obtain sine and cosine signals;
the second incremental window comprises two portions phases of which are staggered by 90° to generate two square wave signals with a phase difference of 90°, the two square wave signals are configured to generate a first bit and a second bit of the absolute signal; the *(N-3)-th* absolute window and the *(N-4)-th* absolute window are configured to generate a third bit and a fourth bit of the absolute signal.

2. The code disc according to claim 1, wherein when a coding bit number *N* of the code disc is equal to four, the more than one incremental code channel and the more than one absolute code channel comprise: a first incremental code channel, a second incremental code channel, a *(N-3)-th* absolute code channel and a *(N-4)-th* absolute code channel;
reticles of the first incremental code channel, the second incremental code channel, the *(N-3)-th* absolute code channel, and the *(N-4)-th* absolute code channel are uniformly distributed with alternate light and dark.

3. The code disc according to claim 2, wherein a reticle period of the second incremental code channel is *M* times that of the first incremental code channel, and a reticle period of the *(N-3)-th* absolute code channel is *2M* times that of the first incremental code channel, and a reticle period of the (*N-4*)*-th* absolute code channel is *4M* times that of the first incremental code channel, *M* is a natural number.

4. The code disc according to claim 1, wherein:
a window width of the second incremental window is *P* times that of the first incremental window, and *P* is a natural number.

5. The code disc according to claim 1, wherein window widths of the *(N-3)-th* absolute window and the *(N-4)-th* absolute window are *2P* times the window width of the first incremental window, and *P* is a natural number.

6. The code disc according to claim 1, wherein the window width of the second incremental window is *P* times that of the first incremental window, and the window widths of the *(N-3)-th* absolute window and the *(N-4)-th* absolute window are *2P* times the window width of the first incremental window, and *P* is a natural number.

7. An encoder, comprising an encoder body and the code disc according to any one of claims 1 to 6.

8. The encoder according to claim 7, further comprising an LED, a photosensitive unit and a signal processing circuit, wherein
the encoder body, the code disc, the LED, the photosensitive unit and the signal processing circuit form a photoelectric encoder.

## Patentansprüche

1. Codierscheibe, umfassend: eine Codierkanalkomponente, die durch Codieren gemäß einem eingestellten Codiermodus erlangt wird, und ein festes Gitter, das der Codierkanalkomponente entspricht,
wobei der Codiermodus ausgelegt ist, um eine Breite eines absoluten Fensters der Codierkanalkomponente zu erhöhen; wobei die Codierkanalkomponente umfasst: mehr als einen inkrementellen Codierkanal und mehr als einen absoluten Codierkanal;
der Codiermodus umfasst: Strichplatten des mehr als einen inkrementellen Codierkanals und des mehr als einen absoluten Codierkanals sind gleichmäßig mit abwechselnd Hell und Dunkel verteilt;
wobei das feste Gitter umfasst: mehr als ein inkrementelles Fenster und mehr als ein absolutes Fenster;
das mehr als eine absolute Fenster ist auf einem Umfang des mehr als einen inkrementellen Fensters verteilt; **dadurch gekennzeichnet, dass**, wenn die Codierbitnummer N der Codierscheibe gleich vier ist, das mehr als eine inkrementale Fenster und das mehr als eine absolute Fenster umfassen: ein erstes inkrementales Fenster, ein zweites inkrementales Fenster, ein *(N-3)-tes* absolutes Fenster und ein *(N-4)-tes* absolutes Fenster;
das erste inkrementelle Fenster umfasst vier Abschnitte, die unter Verwendung eines Vier-Quadranten-Teilphasenverfahrens angeordnet sind, um Signale A, /A und B,/B zu erzeugen, die ausgelegt sind, um Sinus- und Cosinus-Signale zu erlangen;
das zweite inkrementelle Fenster umfasst zwei Abschnitte, deren Phasen um 90° versetzt sind, um zwei Rechtecksignale mit einer Phasendifferenz von 90° zu erzeugen, die zwei Rechtecksignale sind dazu ausgelegt, ein erstes Bit und ein zweites Bit des absoluten Signals zu erzeugen; das *(N-3)-te* absolute Fenster und das *(N-*4)-te absolute Fenster sind dazu ausgelegt, ein drittes Bit und ein viertes Bit des absoluten Signals zu erzeugen.

2. Codierscheibe nach Anspruch 1, wobei, wenn eine Codierbitnummer N der Codierscheibe gleich vier ist, der mehr als eine inkrementale Codierkanal und der mehr als eine absolute Codierkanal umfassen: einen ersten inkrementalen Codierkanal, einen zweiten inkrementalen Codierkanal, einen *(N-3)-ten* absoluten Codierkanal und einen *(N-4)-ten* absoluten Codierkanal;
Strichplatten des ersten inkrementalen Codierkanals, des zweiten inkrementalen Codierkanals, des *(N-3)-ten* absoluten Codierkanals und des *(N-4)-ten* absoluten Codierkanals sind gleichmäßig mit abwechselnd Hell und Dunkel verteilt.

3. Codierscheibe nach Anspruch 2, wobei eine Strichplattenperiode des zweiten inkrementalen Codierkanals das M-fache derjenigen des ersten inkrementalen Codierkanals beträgt und eine Strichplattenperiode des *(N-3)-ten* absoluten Codierkanals das *2M*-fache derjenigen des ersten inkrementalen Codierkanals beträgt und eine Strichplattenperiode des *(N-4)-ten* absoluten Codierkanals das *4M*-fache derjenigen des ersten inkrementalen Codierkanals beträgt, wobei M eine natürliche Zahl ist.

4. Codierscheibe nach Anspruch 1, wobei:
eine Fensterbreite des zweiten inkrementellen Fensters das *P*-fache derjenigen des ersten inkrementellen Fensters ist, und *P* eine natürliche Zahl ist.

5. Codierscheibe nach Anspruch 1, wobei die Fensterbreiten des *(N-3)-ten* absoluten Fensters und des *(N-4)-ten* absoluten Fensters das *2P*-fache der Fensterbreite des ersten inkrementalen Fensters sind und P eine natürliche Zahl ist.

6. Codierscheibe nach Anspruch 1, wobei die Fensterbreite des zweiten inkrementalen Fensters das P-fache derjenigen des ersten inkrementalen Fensters beträgt und die Fensterbreiten des *(N-3)-ten* absoluten Fensters und des *(N-4)-ten* absoluten Fensters das *2P-*fache der Fensterbreite des ersten inkrementalen Fensters betragen und P eine natürliche Zahl ist.

7. Codierer, umfassend einen Codiererkörper und die Codierscheibe nach einem der Ansprüche 1 bis 6.

8. Codierer nach Anspruch 7, ferner umfassend eine LED, eine lichtempfindliche Einheit und eine Signalverarbeitungsschaltung,
wobei der Codiererkörper, die Codierscheibe, die LED, die lichtempfindliche Einheit und die Signalverarbeitungsschaltung einen photoelektrischen Codierer bilden.

## Revendications

1. Disque de code, comprenant : une composante de canal de code obtenue par codage selon un mode de codage défini, et un réseau fixe correspondant à la composante de canal de code,
dans lequel le mode de codage est configuré pour augmenter une largeur d'une fenêtre absolue de la composante de canal de code ;
dans lequel la composante de canal de code comprend :
plus d'un canal de code incrémentiel et plus d'un canal de code absolu ;
le mode de codage comprend : des réticules, de plus d'un canal de code incrémentiel et de plus d'un canal de code absolu, sont répartis uniformément avec une alternance de clair et de foncé ;
dans lequel le réseau fixe comprend : plus d'une fenêtre incrémentielle et plus d'une fenêtre absolue ;
la plus d'une fenêtre absolue est répartie sur une périphérie de la plus d'une fenêtre incrémentielle ;
**caractérisé en ce que** lorsque le nombre de bits de codage N du disque de code est égal à quatre, la plus d'une fenêtre incrémentielle et la plus d'une fenêtre absolue comprennent : une première fenêtre incrémentielle, une deuxième fenêtre incrémentielle, une *(N-3)-ème* fenêtre absolue et une *(N-4)-ème* fenêtre absolue ;
la première fenêtre incrémentielle comprend quatre parties disposées en utilisant une méthode de phase divisée en quatre quadrants pour générer des signaux A, /A, et B, /B qui sont configurés pour obtenir des signaux sinusoïdaux et cosinusoïdaux ;
la deuxième fenêtre incrémentielle comprend deux parties dont les phases sont décalées de 90° pour générer deux signaux d'onde carrée avec une différence de phase de 90°, les deux signaux d'onde carrée sont configurés pour générer un premier bit et un deuxième bit du signal absolu ; la *(N-3)-ème* fenêtre absolue et la *(N-4)-ème* fenêtre absolue sont configurées pour générer un troisième bit et un quatrième bit du signal absolu.

2. Disque de code selon la revendication 1, dans lequel lorsqu'un nombre de bits de codage N du disque de code est égal à quatre, le plus d'un canal de code incrémentiel et le plus d'un canal de code absolu comprennent : un premier canal de code incrémentiel, un deuxième canal de code incrémentiel, un *(N-3)-ème* canal de code absolu et un *(N-4)-ème* canal de code absolu ; les réticules du premier canal de code incrémentiel, du deuxième canal de code incrémentiel, du *(N-3)-ème* canal de code absolu et du *(N-4)-ème* canal de code absolu sont uniformément répartis avec une alternance de clair et de foncé.

3. Disque de code selon la revendication 2, dans lequel une période de réticule du deuxième canal de code incrémentiel est *M* fois celle du premier canal de code incrémentiel, et une période de réticule du *(N-3)-ème* canal de code absolu est *2M* fois celle du premier canal de code incrémentiel, et une période de réticule du *(N-4)-ème* canal de code absolu est *4M* fois celle du premier canal de code incrémentiel, M étant un entier naturel.

4. Disque de code selon la revendication 1, dans lequel : une largeur de fenêtre de la deuxième fenêtre incrémentielle est P fois celle de la première fenêtre incrémentielle, et P est un entier naturel.

5. Disque de code selon la revendication 1, dans lequel des largeurs de fenêtre de la *(N-3)-ème* fenêtre absolue et de la *(N-4)-ème* fenêtre absolue sont *2P* fois la largeur de fenêtre de la première fenêtre incrémentielle, et *P* est un entier naturel.

6. Disque de code selon la revendication 1, dans lequel la largeur de fenêtre de la deuxième fenêtre incrémentielle est *P* fois celle de la première fenêtre incrémentielle, et les largeurs de fenêtre de la *(N-3)-ème* fenêtre absolue et de la *(N-4)-ème* fenêtre absolue sont *2P* fois la largeur de fenêtre de la première fenêtre incrémentielle, et *P* est un entier naturel.

7. Codeur, comprenant un corps de codeur et le disque de code selon l'une quelconque des revendications 1 à 6.

8. Codeur selon la revendication 7, comprenant de plus une DEL, une unité photosensible et un circuit de traitement de signaux,
dans lequel le corps du codeur, le disque de code, la DEL, l'unité photosensible et le circuit de traitement de signaux forment un codeur photoélectrique.
